# EUROPEAN PATENT SPECIFICATION

(11) **EP 2 528 395 B1**
(45) Date of publication and mention of the grant of the patent: **09.05.2018**
(21) Application number: 12178836.8
(22) Date of filing: 06.06.2008
(51) Int. Cl.: H04W 48/20

(54) **CELL-SELECTIVE NETWORK ACCESS**
ZELLSELEKTIVER NETZWERKZUGANG
ACCÈS AU RÉSEAU À SÉLECTIVITÉ DE CELLULE

(43) Date of publication of application: 28.11.2012
(62) Divisional of application: 08759080.8
(73) Proprietor: HMD Global Oy, 02610 Espoo (FI)
(72) Inventor: Jiang, Hai, 100013 Beijing (CN); Wang, Xiao Yi, 00000 Beijing (CN); Wei, Chao, 100025 Beijing (CN); Zhang, Dong Mei, 100089 Beijing (CN); Kang, Jian Feng, 100039 Beijing (CN); Wu, Yi, 100096 Beijing (CN)
(74) Representative: Papula Oy

(56) References cited:
- WO-A1-2005/043866
- US-A1- 2005 250 502
- US-A1- 2007 060 126
- US-A1- 2008 132 239
- US-A1- 2008 219 216

## Description

### FIELD

Embodiments of the present invention relate to a method and apparatuses for providing access to a wireless network, such as - but not limited to - Universal Mobile Communication System (UMTS) or Long Term Evolution (LTE) networks or Mobile WiMAX (Worldwide Interoperability for Microwave Access).

### BACKGROUND

Home base stations, home NodeBs, femto eNodeBs or any other type of home access device (in the following referred to as "HNB") have become a widely discussed topic within 3^{rd} Generation Partnership Project (3GPP) as well as in the operator and manufacturer community. When deployed in homes and offices, HNBs allow subscribers to use their existing handsets - in a building - with significantly improved coverage and increased broadband wireless performance. Moreover, Internet Protocol (IP) based architecture allows deployment and management in virtually any environment with broadband Internet service. Femto cells with HNBs thus enable small, low-cost cellular base stations aimed at improving indoor coverage, so that small cellular access points can be provided, that connect to a mobile operator's network using residential digital subscriber line (DSL) or cable broadband connections. The concept of femto cells is simple: making a base station cheap enough to be deployed in high volume for residential use, connected to the core network via broadband. This would deliver a subscriber the same service and benefit as a converged offering but, crucially, would use existing standard handsets, with no need to upgrade to expensive dual-mode devices.

In HNB scenarios, it is generally assumed that an end user is buying a cheap (Wireless Local Area Network (WLAN) like) product and also installs this physical entity at his home. Such a HNB would then provide coverage/service to the terminals registered by the owner of the HNB. Still the HNB would use the same spectrum owned by the operator and as such at least partly the spectrum the operator is using to provide macro cell coverage to the area where the HNB is located in.

Besides third generation (3G) mobile communication systems, the interest of femto cell also applies equally to emerging wireless broadband technologies such as WiMAX (Worldwide Interoperability for Microwave Access) and LTE.

A femto cell could provide mobile service to a terminal device (e.g. mobile station (MS) or user equipment (UE)) with high data throughput and better coverage if the terminal device is located within femto cell's coverage. Moreover, it is possible to have a specific pricing system for femto cells, which is different from that for macro cells depending on the operator's business model. For example, flat monthly payment for each femto cell at home or small office is possible.

WO 2005/043866 A1 discloses a method for enabling a mobile communications device to transition from a first wireless communications network to a second wireless communications network.

### SUMMARY

The invention relates to a method for a cellular network, an apparatus for a cellular network and a computer program product as defined in the appended claims. The above apparatuses may be implemented as network elements or nodes, access devices, fixed or mobile terminal devices, or as modules, chips or chip sets provided in these nodes, elements or devices.

Accordingly, it is proposed to differentiate different cell types by several ways, so that a terminal device can selectively access a cell type based on its preferences: While the terminal device initially accesses to the network, it can listen to the preamble and/or header broadcasted from an access device (e.g. base station (BS) or HNB). If the detected preamble signals are both strong enough from cell types, the terminal device can selectively access the desired first cell type (e.g. femto cell) rather than the second cell type (e.g. macro cell), so that it can enjoy certain benefits, e.g., pricing benefit, and/or high data rate. The proposed solution thus helps terminal devices to identify which is a desired cell type from a range of accessible cell types, since it can distinguish between broadcast signals of different cell types.

In a specific implementation example, the first cell type may have a cell size smaller than the second cell type. More specifically, the first cell type may be a femto cell and the second cell type is a macro cell. However, the present invention is not limited to such cell types, but can be used for differentiation of any cell types with different characteristics.

The checking may for example comprise detecting a predetermined cell type specific preamble or a predetermined cell type specific flag or a predetermined cell type specific header repetition. Thus, cell type indication can be provided by a predetermined cell type specific preamble or a predetermined cell type specific flag or a predetermined cell type specific header repetition pattern.

According to specific but non-limiting implementation example, the cell type specific preamble may be identified by a predetermined allocated preamble modulation series.

According to another specific but non-limiting implementation example, the header portion may be a frame control header and the cell type specific flag may be provided in the frame control header,

According to a further specific but non-limiting implementation example, the cell type specific header repetition may be performed with a frame control header.

According to a still further specific but non-limiting implementation example, the cell type specific header repetition may involve a predetermined polarity change.

Other advantageous modifications are defined in the dependent claims.

### BRIEF DESCRIPTION OF THE DRAWINGS

The invention will now be described in greater detail based on exemplary embodiments with reference to the accompanying drawings in which:
Fig. 1 shows a schematic network architecture in which the present invention can be implemented;
Fig. 2 shows a schematic block diagram of an access device and a terminal device according to an embodiment;
Fig. 3 shows a flow diagram of a selective access procedure according to an embodiment;
Fig. 4 shows a table indicating frame control header format according to an embodiment; and
Fig. 5 shows a schematic block diagram of software-based implementation according to an embodiment.

### DESCRIPTION OF THE EMBODIMENTS

In the following, embodiments of the present invention will be described based on an exemplary and non-limiting WiMAX network architecture.

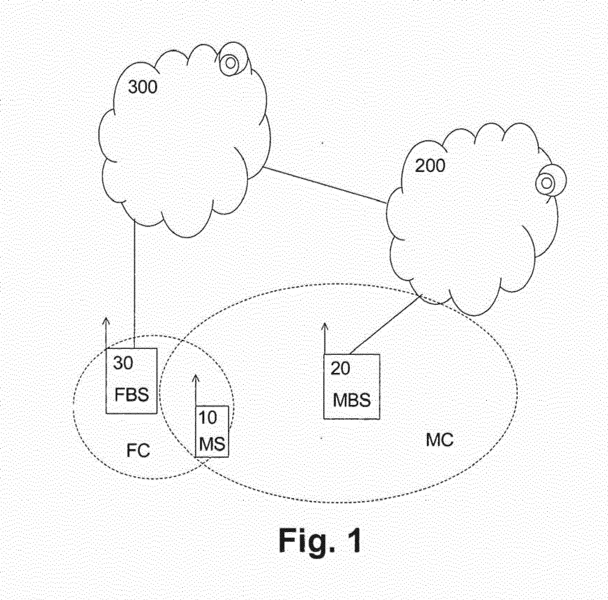

Fig. 1 shows a schematic network architecture with a femto BS (FBS) 30 and a macro BS (MBS) 20 according to an embodiment.

According to Fig. 1, in the home domain, the FBS 30 controls a small femto cell (FC) and the MBS 20 controls a larger conventional macro cell (MC). To achieve access to a fixed network (such as the Internet), the FBS 30 is connected in the WiMAX architecture to a first wireless network 300 (e.g. a wide area network (WAN) 300 via an xDSL modem and a DSLAM or any other type of wireless network. Furthermore, in the mobile operator's domain, the MBS 20 is connected to a second wireless network 200 (e.g. a mobile communication network (such as LTE) via an access serving network gateway (ASN-GW) (not shown) which may provide a link to the second network 300).

In the embodiment, the FBS 30 can be differentiated from the MBS 20 in several ways, as explained later. Thereby, a terminal device or MS 10 located within the coverage of both FC and MC could selectively access to the FBS 30. More specifically, the MS 10 initiates a network access, Meanwhile, the MS 10 may listen to at least one of a preamble and a header (e.g. frame control header (FCH)) of a signal broadcasted from the FBS 30 and/or MBS 20. If the detected preamble and/or header signals are both strong enough from both MBS 20 and FBS 30. The MS 10 could selectively access to the FBS 30 rather than to the MBS 20. Thereby the MS 10 could enjoy e.g. pricing benefit, and/or high data rate.

During handover, the same rule could be followed. Both FBS 30 and MBS 20 are available from a target BS list. Then, the MS 10 could handover to the FBS 30 instead of the MBS 20. The MS 10 could identify whether there is and which is the FBS 30.

For example, in Fig. 1, the MS 10 is located at a point which is covered by both MBS 20 and FBS 30. The MS 10 could then selectively access to the FBS 30 during initial access, handover and that the like. The MS 10 could identify that there is an FBS available with high data rate and low cost. If other policy based cell selection algorithm is deployed, the differentiation between FBS 30 and MBS 20 could help as well.

It is noted that the embodiment of Fig. 1 can be modified in various ways. The MBS 20 and the FBS 30 may be connected to the same network (e.g. WiMAX, LTE etc.) or to different networks in a manner different or opposite to Fig. 1.

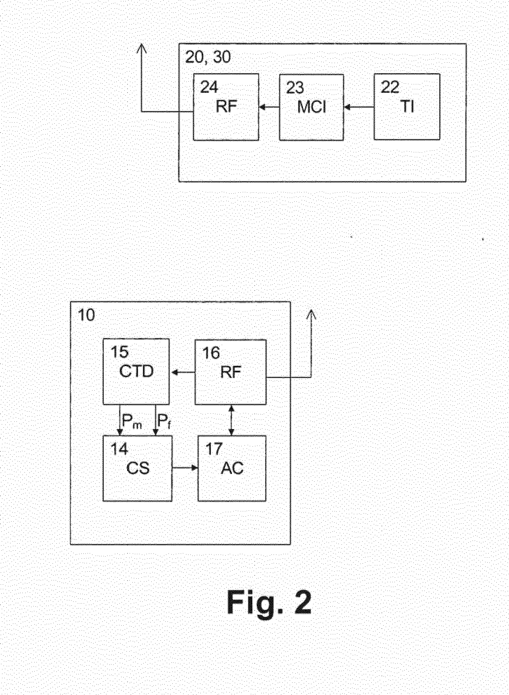

Fig. 2 shows a schematic block diagram of the MS 10 and the MBS 20 or FBS 30 according to an embodiment. It is noted that only those functionalities useful for understanding the present invention are depicted in Fig. 2.

At the MS 10, a received information is checked by a cell type detection (CTD) functionality or unit 15 for checking a header or preamble of a received broadcast signal to derive a cell type which has transmitted the received broadcast signal. The CTD functionality or unit 15 may be provided as a part of a radio resource control (RRC) functionality. RRC may control reception operation of a receiver part of a radio frequency (RF) front-end unit 16. The RF front-end unit 16 may enable wireless transmission and reception via an antenna. Based on the detected cell type, the CTD functionality or unit 15 may for example determine signal quality, power, or strength of the received cell type specific preamble or header. The CTD functionality or unit 15 may forward respective values or parameters Pₘ and P_{f} which may for example indicate the signal quality, power, or strength received from the MC and FC, respectively. Of course, other cell types may be discriminated as well.

Based at least on the parameters Pₘ and P_{f}, a cell selection functionality or unit 14 may select a cell type, e.g. FBS 30 or MBS 20, to be used for network access, and may control an access controller or control unit 17 to initiate a corresponding control signaling for network access.

At the MBS 20 or FBS 30, a cell type information may be set in a type indicator or unit (TI) 22. The type indicator or unit (TI) 22 may be controlled in response to a corresponding control input. The control input could for example be supplied by the network operator or stored in a suitable memory device (not shown). Based at least on the cell type information, a header or preamble or transmission thereof in a broadcast signal may be modified in a message control information (MCI) functionality or unit 23 and may be transmitted via an RF front-end unit 24 and an antenna.

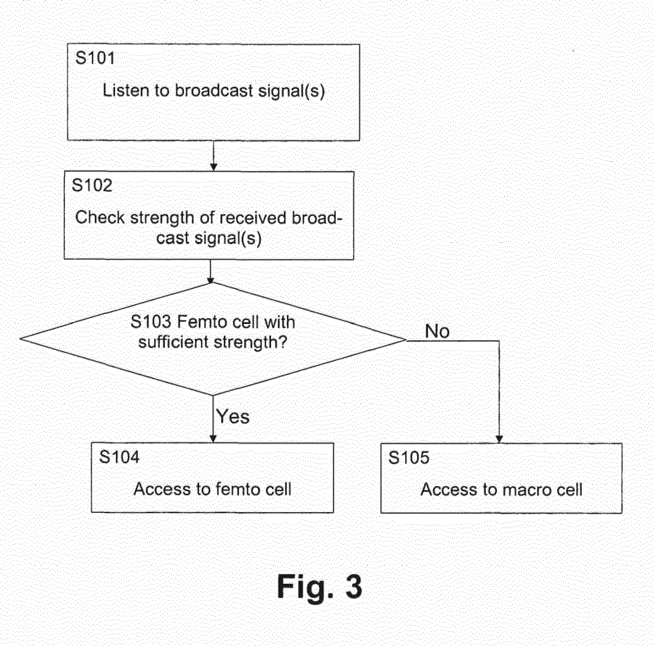

Fig. 3 shows a flow diagram of a receiving-side processing according to an embodiment of the present invention, which could be implemented based on a processing routine in the MS 10.

In step S101, the MS 10 listens to broadcast signal(s) received from access networks, e.g., from the FBS 30 or MBS 20. Then, in step S102, the cell type and strength (or quality or power etc.) is detected and it is decided in step S103 whether a FC signal is available at sufficient strength. If so, access to the FC is initiated in step S104. Otherwise, if it is decided in step S103 that no FC signal with sufficient strength (or quality or power etc.) is available, an access to the MC is initiated in step S105, if available.

In the following, example implementation options to distinguish different cell types (e.g. FBS 30 from MBS 20 or the like) are presented.

According to a first example implementation option, different preambles can be allocated to the FBS 30 and the MBS 20. In the WiMAX 802.16e standard, there are 114 preamble modulation series per segment and cell identity (Idcell) for the 1024-FFT (fast fourier transform) mode. Thus, a certain amount of preamble modulation series could be allocated to the FBS 30. The remaining preamble modulation series may then still be used for the MBS 20. As an example, preambles with IDcell= {30, 31} and segment= {0, 1, 2} could be allocated to the FBS 30. Once the MS 10 detects that the preamble series of the scanned BS belongs to the FBS category, it may know this BS is an FBS.

According to an another example implementation option, a flag in the frame control header (FCH) could be set to identify the FBS 30. A downlink frame prefix (DL_Frame_Prefix) is a data structure transmitted at the beginning of each frame and contains information regarding the current frame and is mapped to the FCH.

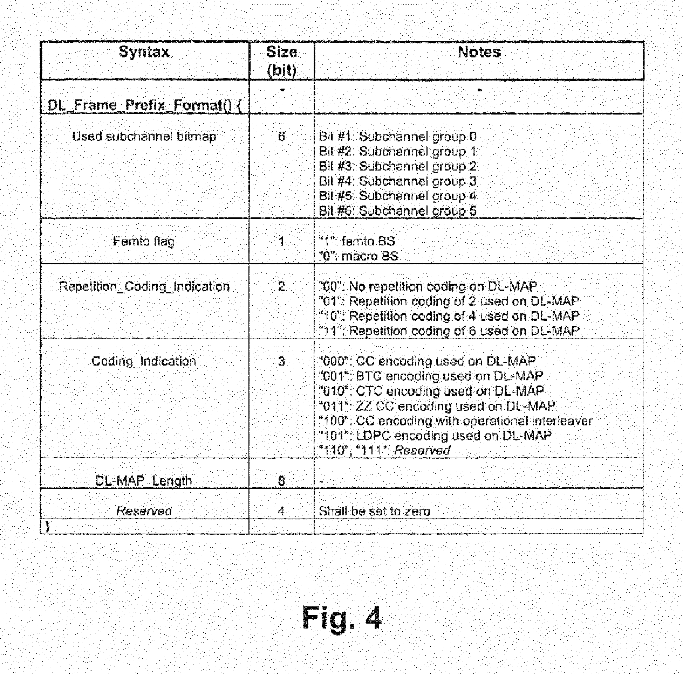

Fig. 4 shows a table indicating an exemplary structure of frame prefix format according to an embodiment, for all FFT sizes except 128. One reserved bit in the downlink frame prefix can be used as a femto flag to denote whether this BS is an FBS or not. If the femto flag is set to "1", the BS from which the received broadcast signal has been transmitted is an FBS. Otherwise the BS is an MBS, or vice versa.

It is apparent that other reserved bits of the frame prefix may be used as well for cell type indication or signaling.

After synchronization with a concerned BS, the MS 10 could identify whether this BS is an FBS or not, so that it could decide whether to access this BS based on its defined policy.

According to a yet another example implementation option, polarity switching may be employed in the FCH repetition. As an example, for FFT sizes other than 128, the first 4 slots in the downlink (DL) part of the segment contain the FCH. These slots are modulated by QPSK (quadrature phase shift keying) with coding rate ½ and repetition coding of 4. To add more information in the FCH, a polarized repetition is employed here.

As an example, for an MBS, the repetition form may be normally defined as [A A A A] according to the standard specification. On the other hand, for an FBS, the repetition form is proposed to be changed according to a predetermined polarity pattern. As an example, the pattern can be [A -A A -A], which indicates that the second and fourth parts or repetitions are inverted. Thus, at the MS end, the different repetition form could be clarified by correlation. This only adds little extra complexity.

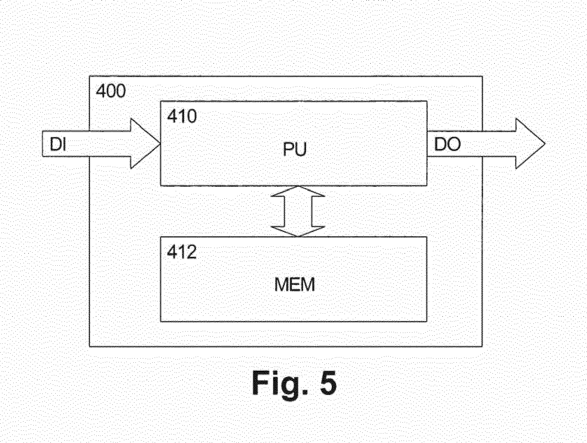

Fig. 5 shows a schematic block diagram of an alternative software-based implementation according to an embodiment. The required functionalities can be implemented in any terminal or network entity (e.g. in the MS 10 or the MBS 20 or the FBS 30) with a processing unit 410. The processing unit 410 may be any processor or computer device with a control unit. The control unit may perform control based on software routines of a control program stored in a memory 412. The control program may also be stored separately on a computer-readable medium. Program code instructions are fetched from the memory 412 and may be loaded to the control unit of the processing unit 410 in order to perform the processing steps of the above device-specific functionalities which may be implemented as the above mentioned software routines. The processing steps may be performed on the basis of input data DI and may generate output data DO. In case of the MS 10, the input data DI may correspond to a received broadcast signal, and the output data DO may correspond to an access signaling for accessing the selected cell. In case of the MBS 20 or the FBS 30, the input data DI may correspond to a received cell type setting information, and the output data DO may correspond to the modified broadcast signal (e.g. header, preamble, or transmission pattern).

Consequently, the above embodiments of the MS 10, MBS 20, and FBS 30 may be implemented as a computer program product comprising code means for generating each individual step of the signaling procedures for the respective entity when run on a computer device or data processor of the respective entity.

In summary, methods and apparatuses for providing selective network access have been described, wherein a cell type indication is provided based on at least one of a preamble and a header portion of a broadcast signal. At the receiving end, it is checked based on at least one of the preamble and the header portion, whether broadcast signals are received from different first and second cell types. The first cell type is selected for network access, if both broadcast signals from the first and second cell types are received with sufficient strength.

It is apparent that the invention can easily be extended to any service and network environment and is not restricted to the LTE or Mobile WiMAX technology area and in particular not to MBSs and FBSs. The proposed embodiments and implementation options can be combined in all possible ways and can be implemented in connection with any base stations with different cell types deployed in a wireless network.

The embodiments may thus vary in that all or a combination of the above methods and techniques are used wherein a specific method, technique or algorithm may be used in accordance with the supported characteristics of the particular system. It is intended that the appended claims cover all such features and advantages of that fall within the scope of the appended claims. As numerous modifications and changes will readily occur to those skilled in the art, it is intended that scope not be limited to the limited number of embodiments described herein. Accordingly, all suitable variations, modifications, combinations and equivalents of the appended claim features are considered part of the scope.

## Claims

1. A method for a cellular network, wherein the cellular network provides service to mobile stations, the method comprising:
providing a cell type indication (22) based at least on one of a preamble and a header portion of a broadcast signal; and
transmitting, to the mobile stations, said broadcast signal (24) with a cell type indication set in accordance with a first or a second cell type (FC, MC) of a cell of the cellular network from which said broadcast signal is transmitted, wherein said first cell type is a femto cell and said second cell type is a macro cell.

2. The method according to claim 1, wherein said cell type indication comprises providing a predetermined cell type specific preamble or a predetermined cell type specific flag or a predetermined cell type specific header repetition pattern.

3. The method according to claim 2, wherein said cell type specific preamble is identified by a predetermined allocated preamble modulation series.

4. The method according to claim 2 or 3, wherein said cell type specific flag is provided in a frame control header.

5. The method according to any one of claims 2 to 4, wherein said cell type specific header repetition is performed with a frame control header.

6. The method according to any one of claims 2 to 5, wherein said cell type specific header repetition involves a predetermined polarity change.

7. An apparatus (20, 30) for a cellular network, wherein the cellular network provides service to mobile stations, the apparatus comprising:
an indicator (22) configured to provide cell type indication based on at least one of a preamble or header portion of a broadcast signal; and
a transmitter (24) configured to transmit, to the mobile stations, said broadcast signal with a first or a second cell type indication (FC, MC) set in accordance with a cell type of a cell of the cellular network from which said broadcast signal is transmitted, wherein said first cell type is a femto cell and said second cell type is a macro cell.

8. An access device (20, 30) comprising an apparatus according to claim 7.

9. An access device (20, 30) according to claim 8 wherein the access device is a macro base station (20, 30, MBS).

10. An access device (20, 30) according to claim 8 wherein the access device is a femto base station (20, 30, FBS).

11. A chip module comprising an apparatus according to claim 7.

12. A computer program product comprising code means (412) for producing the steps of any of the method claims 1 to 6 when run on a computer device (400, 410).

## Patentansprüche

1. Verfahren für ein Mobilfunknetzwerk, wobei das Mobilfunknetzwerk einen Dienst für Mobilstationen bereitstellt, wobei das Verfahren umfasst
ein Bereitstellen einer Zelltypindikation (22) basierend zumindest auf einem aus einer Präambel und einem Headerabschnitt eines Broadcast-Signals, und
ein Übertragen, an die Mobilstationen, des Broadcast-Signals (24) mit einer gemäß einem ersten oder einem zweiten Zelltyp (FC, MC) einer Zelle des Mobilfunknetzwerks, von dem das Broadcast-Signal übertragen wird, eingestellten Zelltypindikation, wobei der erste Zelltyp eine Femto-Zelle und der zweite Zelltyp eine Macro-Zelle ist.

2. Verfahren nach Anspruch 1, wobei die Zelltypindikation ein Bereitstellen einer vorbestimmten zelltypspezifischen Präambel oder eines vorbestimmten zelltypspezifischen Flags oder eines vorbestimmten zelltypspezifischen Headerwiederholungsmusters umfasst.

3. Verfahren nach Anspruch 2, wobei die zelltypspezifische Präambel durch eine vorbestimmte zugewiesene Präambelmodulationsserie identifiziert wird.

4. Verfahren nach Anspruch 2 oder 3, wobei das zelltypspezifische Flag in einem Framesteuerheader bereitgestellt wird.

5. Verfahren nach einem der Ansprüche 2 bis 4, wobei die zelltypspezifische Headerwiederholung mit einem Framesteuerheader durchgeführt wird.

6. Verfahren nach einem der Ansprüche 2 bis 5, wobei die zelltypspezifische Headerwiederholung eine vorbestimmte Polaritätsänderung involviert.

7. Vorrichtung (20, 30) für ein Mobilfunknetzwerk, wobei das Mobilfunknetzwerk einen Dienst für Mobilstationen bereitstellt, wobei die Vorrichtung umfasst
eine Indikatoreinrichtung (22), der dazu eingerichtet ist, um eine Zelltypindikation basierend auf zumindest einem aus einer Präambel oder einem Headerabschnitt eines Broadcast-Signals bereitzustellen, und
eine Übertragungseinrichtung (24), die dazu eingerichtet ist, um an die Mobilstationen das Broadcast-Signal mit einer gemäß einem Zelltyp einer Zelle des Mobilfunknetzwerks, von dem das Broadcast-Signal übertragen ist, eingestellten ersten oder zweiten Zelltypindikation (FC, MC) zu übertragen, wobei der erste Zelltyp eine Femto-Zelle und der zweite Zelltyp eine Macro-Zelle ist.

8. Zugriffsgerät (20, 30), umfassend eine Vorrichtung nach Anspruch 7.

9. Zugriffsgerät (20, 30) nach Anspruch 8, wobei das Zugriffsgerät eine Macro-Basisstation (20, 30, MBS) ist.

10. Zugriffsgerät (20, 30) nach Anspruch 8, wobei das Zugriffsgerät eine Femto-Basisstation (20, 30, FBS) ist.

11. Chipmodul, umfassend eine Vorrichtung nach Anspruch 7.

12. Computerprogrammprodukt mit einer Codeeinrichtung (412) zur Bewirkung, wenn auf einem Computergerät (400, 410) ausgeführt, der Schritte eines der Verfahrensansprüche 1 bis 6.

## Revendications

1. Procédé pour un réseau cellulaire, dans lequel le réseau cellulaire fournit des services à des stations mobiles, le procédé comprenant :
la fourniture d'une indication de type de cellule (22) sur la base d'au moins un parmi un préambule et une partie d'en-tête d'un signal de diffusion, et
la transmission aux stations mobiles dudit signal de diffusion (24) avec une indication de type de cellule définie conformément à un premier ou un second type de cellule (FC, MC) d'une cellule du réseau cellulaire, depuis laquelle ledit signal de diffusion est transmis, ledit premier type de cellule étant une femtocellule et ledit second type de cellule étant une macrocellule.

2. Procédé selon la revendication 1, dans lequel ladite indication de type de cellule comprend la fourniture d'un préambule prédéterminé spécifique au type de cellule ou d'un indicateur prédéterminé spécifique au type de cellule ou d'un motif prédéterminé de répétition d'en-tête spécifique au type de cellule.

3. Procédé selon la revendication 2, dans lequel ledit préambule spécifique au type de cellule est identifié par une série de modulations prédéterminée de préambule.

4. Procédé selon la revendication 2 ou 3, dans lequel ledit indicateur spécifique au type de cellule est fourni dans un en-tête de contrôle de trame.

5. Procédé selon l'une quelconque des revendications 2 à 4, dans lequel ladite répétition d'en-tête spécifique au type de cellule est effectuée avec un en-tête de contrôle de trame.

6. Procédé selon l'une quelconque des revendications 2 à 5, dans lequel ladite répétition d'en-tête spécifique au type de cellule implique un changement de polarité prédéterminé.

7. Appareil (20, 30) pour un réseau cellulaire, dans lequel le réseau cellulaire fournit des services à des stations mobiles, l'appareil comprenant :
un indicateur (22) configuré pour fournir des indications de type de cellule sur la base d'au moins un parmi un préambule ou une partie d'en-tête d'un signal de diffusion, et
un transmetteur (24) configuré pour transmettre, aux stations mobiles, ledit signal de diffusion avec une première ou une seconde indication de type de cellule (FC, MC) définie conformément à un type de cellule d'une cellule du réseau cellulaire, depuis laquelle ledit signal de diffusion est transmis, ledit premier type de cellule étant une cellule femto et ledit second type de cellule étant une cellule macro.

8. Dispositif d'accès (20, 30) comprenant un appareil selon la revendication 7.

9. Dispositif d'accès (20, 30) selon la revendication 8, dans lequel le dispositif d'accès est une station de base macrocellulaire (20, 30 MBS).

10. Dispositif d'accès (20, 30) selon la revendication 8, dans lequel le dispositif d'accès est une station de base femtocellulaire (20, 30, FBS).

11. Module de puce comprenant un appareil selon la revendication 7.

12. Produit de programme informatique comprenant des moyens de code (412) pour produire les étapes suivant l'une quelconque des revendications de procédé 1 à 6, lorsqu'il est exécuté sur un dispositif informatique (400, 410).
